# EUROPEAN PATENT APPLICATION

(11) **EP 4 832 388 A1**
(43) Date of publication of application: **28.10.2026**
(21) Application number: 24906329.8
(22) Date of filing: 17.12.2024
(51) Int. Cl.: H04L 1/1812, H04W 72/0446

(54) **HARQ-ACK INFORMATION TRANSMISSION METHOD, TERMINAL, AND NETWORK SIDE DEVICE**

(30) Priority: 18.12.2023 CN 202311751253
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Walaski, Jan Filip
(86) International application number: PCT/CN2024/139820
(87) International publication number: WO 2025/130848

(57) **Abstract**

Embodiments of the present application relate to the technical field of communications. Disclosed are a HARQ-ACK information transmission method, a terminal, and a network side device. The HARQ-ACK information transmission method in the embodiments of the present application is applied to a carrier or cell configured with SBFD information. The terminal is scheduled to transmit a plurality of pieces of HARQ-ACK information in one time unit. The method comprises: a terminal performs a first operation, wherein the first operation is used for transmitting at least one piece of HARQ-ACK information among the plurality of pieces of HARQ-ACK information, and the first operation comprises at least one of the following: determining a transmission mode of the plurality of pieces of HARQ-ACK information; and determining a time domain type corresponding to the plurality of pieces of HARQ-ACK information.

## Description

### CROSS REFERENCE TO RELATED APPLICATIONS

This application claims priority to Chinese Patent Application No. 202311751253.8, filed with the China National Intellectual Property Administration on December 18, 2023 and entitled "METHOD FOR TRANSMITTING HARQ-ACK INFORMATION, TERMINAL, AND NETWORK SIDE DEVICE", which is incorporated herein by reference in its entirety.

### TECHNICAL FIELD

This application relates to the field of communication technologies, and specifically, to a method for transmitting hybrid automatic repeat request acknowledgement (Hybrid Automatic Repeat request Acknowledgement, HARQ-ACK) information, a terminal, and a network side device.

### BACKGROUND

When a conventional cellular network is deployed, frequency division duplex (Frequency Division Duplex, FDD) or time division duplex (Time Division Duplex, TDD) may be adopted based on available spectrum, service characteristic, and the like. When the FDD is adopted, uplink transmission and downlink transmission are located at different frequencies, do not interfere with each other, and may occur simultaneously. When the TDD is adopted, uplink transmission and downlink transmission are located on a same frequency and are conducted alternately in a time division manner.

For more flexible utilization of limited spectrum resources to dynamically meet service requirements and improve performance such as resource utilization efficiency as well as uplink coverage and a delay of data transmission, in a conventional technology, a flexible duplex mode based on a frequency domain non-overlapping subband, namely, subband full duplex (SubBand Full Duplex, SBFD), is provided. In the SBFD, a network side implements full duplex, and a terminal side implements half duplex or full duplex.

Within systems deployed with the SBFD, there is currently no corresponding solution for transmission of HARQ-ACK information.

### SUMMARY

Embodiments of this application provide a method for transmitting HARQ-ACK information, a terminal, and a network side device, to resolve a problem that transmission of the HARQ-ACK information cannot be implemented within a system deployed with SBFD.

According to a first aspect, a method for transmitting HARQ-ACK information is provided. The method is applied to a carrier or a cell configured with SBFD information. A terminal is scheduled to transmit a plurality of pieces of HARQ-ACK information within a time unit. The method includes: The terminal performs a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

According to a second aspect, a method for transmitting HARQ-ACK information is provided. The method is applied to a carrier or a cell configured with SBFD information. A terminal is scheduled to transmit a plurality of pieces of HARQ-ACK information within a time unit. The method includes: A network side device performs a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

According to a third aspect, an apparatus for transmitting HARQ-ACK information is provided. The apparatus is used in a carrier or a cell configured with SBFD information. The apparatus is scheduled to transmit a plurality of pieces of HARQ-ACK information within a time unit. The apparatus includes: a first execution module, configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

According to a fourth aspect, an apparatus for transmitting HARQ-ACK information is provided. The apparatus is used in a carrier or a cell configured with SBFD information. A terminal is scheduled to transmit a plurality of pieces of HARQ-ACK information within a time unit. The apparatus includes: a second execution module, configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

According to a fifth aspect, a terminal is provided. The terminal includes a processor and a memory. The memory stores a program or instructions runnable on the processor. When the program or the instructions are executed by the processor, the steps of the method according to the first aspect are implemented.

According to a sixth aspect, a terminal is provided, including a processor and a communication interface. The terminal is used in a carrier or a cell configured with SBFD information. The terminal is scheduled to transmit a plurality of pieces of HARQ-ACK information within a time unit. The processor is configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

According to a seventh aspect, a network side device is provided. The network side device includes a processor and a memory. The memory stores a program or instructions runnable on the processor. When the program or the instructions are executed by the processor, the steps of the method according to the second aspect are implemented.

According to an eighth aspect, a network side device is provided, including a processor and a communication interface. The network side device is used in a carrier or a cell configured with SBFD information. A terminal is scheduled to transmit a plurality of pieces of HARQ-ACK information within a time unit. The processor is configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

According to a ninth aspect, a readable storage medium is provided. The readable storage medium stores a program or instructions. When the program or the instructions are executed by a processor, the steps of the method according to the first aspect or the steps of the method according to the second aspect are implemented.

According to a tenth aspect, a wireless communication system is provided, including a terminal and a network side device. The terminal may be configured to perform the steps of the method according to the first aspect, and the network side device may be configured to perform the steps of the method according to the second aspect.

According to an eleventh aspect, a chip is provided. The chip includes a processor and a communication interface. The communication interface is coupled to the processor, and the processor is configured to run a program or instructions, to implement the steps of the method according to the first aspect or the steps of the method according to the second aspect.

According to a twelfth aspect, a computer program/program product is provided. The computer program/program product is stored in a storage medium. The computer program/program product is executed by at least one processor to implement the steps of the method according to the first aspect or the steps of the method according to the second aspect.

In embodiments of this application, in a case that the terminal is scheduled to transmit the plurality of pieces of HARQ-ACK information within the time unit, the terminal performs the first operation, where the first operation is used for transmitting the at least one piece of HARQ-ACK information in the plurality of pieces of HARQ-ACK information, and the first operation includes at least one of the following: determining the transmission manner of the plurality of pieces of HARQ-ACK information; and determining the time domain types corresponding to the plurality of pieces of HARQ-ACK information. The first operation performed by the terminal allows for transmission of HARQ-ACK information in a carrier or a cell configured with SBFD information. This may improve effectiveness of HARQ-ACK information feedback, improving transmission performance of a PDSCH, and improving effectiveness of a communication system.

### BRIEF DESCRIPTION OF THE DRAWINGS

FIG. 1 is a diagram of a wireless communication system according to an embodiment of this application;
FIG. 2 is a schematic flowchart of a method for transmitting HARQ-ACK information according to an embodiment of this application;
FIG. 3 is a diagram of a time-frequency relationship of a method for transmitting HARQ-ACK information according to an embodiment of this application;
FIG. 4 is a diagram of a time-frequency relationship of a method for transmitting HARQ-ACK information according to an embodiment of this application;
FIG. 5 is a schematic flowchart of a method for transmitting HARQ-ACK information according to an embodiment of this application;
FIG. 6 is a diagram of a structure of an apparatus for transmitting HARQ-ACK information according to an embodiment of this application;
FIG. 7 is a diagram of a structure of an apparatus for transmitting HARQ-ACK information according to an embodiment of this application;
FIG. 8 is a diagram of a structure of a communication device according to an embodiment of this application;
FIG. 9 is a diagram of a structure of a terminal according to an embodiment of this application; and
FIG. 10 is a diagram of a structure of a network side device according to an embodiment of this application.

### DESCRIPTION OF EMBODIMENTS

The following clearly describes the technical solutions in embodiments of this application with reference to the accompanying drawings in embodiments of this application. It is clear that the described embodiments are some rather than all of embodiments of this application. All other embodiments obtained by a person of ordinary skill in the art based on embodiments of this application shall fall within the protection scope of this application.

In this application, the terms "first", "second", and the like are used to distinguish between similar objects, but are not used to describe a specific order or sequence. It should be understood that, the terms used in this way are interchangeable in proper circumstances, so that embodiments of this application can be implemented in an order other than the order illustrated or described herein. In addition, objects distinguished by "first" and "second" are usually of the same type, and do not limit a quantity of the objects. For example, a first object may be one or more. In addition, "or" in this application indicates at least one of connected objects. For example, "A or B" includes three solutions, that is, Solution 1: including A but not including B; Solution 2: including B but not including A; and Solution 3: including both A and B. The character "/" generally indicates an "or" relationship between associated objects.

The term "indication" in this application may be a direct indication (or an explicit indication), or may be an indirect indication (or an implicit indication). The direct indication may be understood as that a sender explicitly informs a receiver of content such as specific information, an operation to be performed, or a request result in an indication sent. The indirect indication may be understood as that the receiver determines corresponding information according to the indication sent by the sender, or performs determining and determines the operation to be performed, or the request result based on a determining result.

It should be noted that the technology described in embodiments of this application is not limited to a long term evolution (Long Term Evolution, LTE)/LTE-advanced (LTE-Advanced, LTE-A) system, and may further be applied to another wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or another system. The terms "system" and "network" in embodiments of this application are usually used interchangeably. The described technologies may be applied to the system and radio technologies mentioned above, or may be applied to other systems and radio technologies. The following descriptions describe a new radio (New Radio, NR) system for exemplary purposes, and NR terms are used in most of the following descriptions. However, the technologies may alternatively be applied to a system other than the NR system, for example, a 6^{th} generation (6^{th} Generation, 6G) communication system.

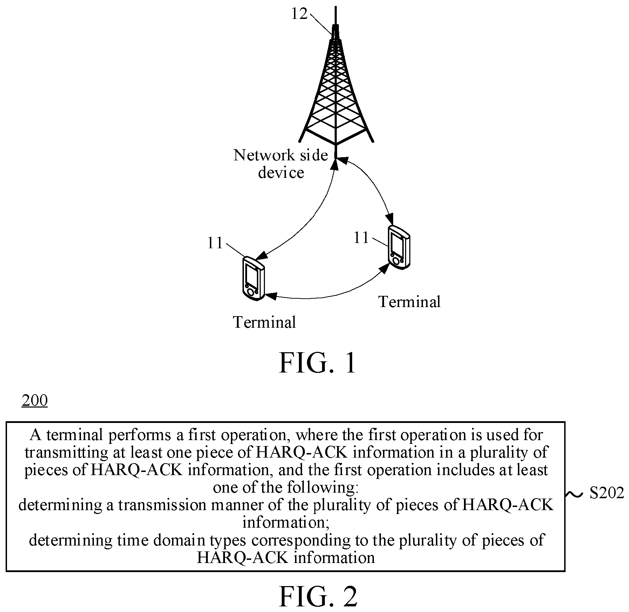

FIG. 1 is a block diagram of a wireless communication system to which an embodiment of this application may be applied. The wireless communication system includes a terminal 11 and a network side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), vehicle user equipment (Vehicle User Equipment, VUE), a ship-mounted device, pedestrian user equipment (Pedestrian User Equipment, PUE), a smart household (a household device having a wireless communication function, such as a refrigerator, a television, a washing machine, or furniture), a game console, a personal computer (Personal Computer, PC), a teller machine, or a self-service machine. The wearable device includes: a smartwatch, a smart band, a smart headset, smart glasses, smart jewelry (a smart bracelet, a smart hand chain, a smart ring, a smart necklace, a smart ankle bracelet, a smart ankle chain, and the like), a smart wristband, smart clothing, and the like. The vehicle user equipment may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or some other suitable term in the art. As long as the base station achieves the same technical effect, the base station is not limited to a specific technical word. It should be noted that the base station in the NR system is used only as an example for description in embodiments of this application, and a specific type of the base station is not limited.

For ease of description of the following solutions, the following concepts and descriptions are provided first.

Based on TDD pattern (pattern) configuration information provided by a network side to a terminal, for example, time division duplex uplink-downlink configuration common (tdd-UL-DL-ConfigurationCommon) or time division duplex uplink-downlink configuration dedicated (tdd-UL-DL-ConfigurationDedicated) for a serving cell (Serving cell) of the terminal, the following symbol types (Symbol types) may be distinguished:
(1) a downlink symbol (DL symbol);
(2) an uplink symbol (UL symbol); and
(3) a flexible symbol (Flexible symbol).

When tdd-UL-DL-ConfigurationCommon or tdd-UL-DL-ConfigurationDedicated is not provided for a serving cell (Serving cell), it may be considered that each symbol (Symbol) is a flexible symbol, or complies with a rule corresponding to the flexible symbol.

Based on the foregoing TDD pattern configuration information and SBFD configuration information provided by the network side to the terminal, the following symbol types may be further distinguished:

### (4) an SBFD symbol (symbol).

The network side may configure, based on the SBFD configuration information, some symbols to be capable of performing an SBFD operation (operation), that is, configure these symbols as SBFD symbols. For example, some or all of symbols, within a single period, determined based on the TDD pattern are configured as the SBFD symbols. These symbols configured as the SBFD symbols may be some or all of the symbol types distinguished based on the TDD pattern configuration information.

For a serving cell configured or activated for the terminal, the SBFD symbols on the serving cell may be further divided into the following symbol types:

a: SBFD symbol for duplex mode 1. For duplex mode 1, the network side supports a full duplex-based SBFD operation. The terminal side supports only a half-duplex-based SBFD operation, that is, in a single SBFD symbol, the terminal can only perform uplink sending or downlink receiving, but cannot simultaneously perform FDM-based uplink sending or downlink receiving.

b: SBFD symbol for duplex mode 2. For duplex mode 2, the network side supports a full duplex-based SBFD operation. The terminal side may support the full duplex-based SBFD operation, that is, in a single SBFD symbol, the terminal may simultaneously perform FDM-based uplink sending and downlink receiving. It may be understood that the terminal that supports the full duplex-based SBFD operation (that is, supports duplex mode 2, or supports the SBFD symbol for duplex mode 2) inevitably supports the half-duplex-based SBFD operation (that is, supports duplex mode 1, or supports the SBFD symbol for duplex mode 1).

### (5) a non-SBFD symbol (non-SBFD symbol).

A symbol that is not configured (or indicated) to perform the SBFD operation may be considered as the non-SBFD Symbol.

Optionally, when the network side configures, based on the SBFD configuration information, a time domain unit in which the SBFD operation may be performed, a configuration granularity may alternatively be a time domain granularity of a slot or another predefined duration. This is not limited herein. The configuration granularity is uniformly described as a distinguishing symbol type, that is, the symbol type is used for distinguishing a type of the time domain unit, and does not limit a specific time domain granularity.

In a conventional technology, for different symbol types (for example, the SBFD symbol and the non-SBFD symbol; or the SBFD symbol for duplex mode 1, the SBFD symbol for duplex mode 2, and the non-SBFD symbol) distinguished based on the SBFD configuration information, corresponding physical uplink control channel (Physical Uplink Control Channel, PUCCH) parameters, for example, configuration parameters such as PUCCH-Config, a PUCCH resource set (PUCCH-ResourceSet), a PUCCH resource (PUCCH-Resource), and the like, may be respectively (directly) configured, or respectively (implicitly based on a frequency domain offset, a respective starting reference point, and the like) derived, to consider/compensate for potential differences in antenna and radio frequency configurations, interference conditions, limitations, and the like corresponding to different symbol types.

The following describes in detail, with reference to the accompanying drawings and by using some embodiments and application scenarios thereof, a method for transmitting HARQ-ACK information provided in an embodiment of this application.

As shown in FIG. 2, an embodiment of this application provides a method 200 for transmitting HARQ-ACK information. The method may be performed by a terminal. In other words, the method may be performed by software or hardware installed in the terminal. The method may be applied to a carrier or a cell configured with SBFD information. The terminal is scheduled to transmit a plurality of pieces of HARQ-ACK information within a time unit. The method includes the following steps.

S202: The terminal performs a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

In some embodiments of this application, the carrier may be a TDD carrier. The cell may be a cell in which a physical uplink control channel (Physical Uplink Control Channel, PUCCH) is located, for example, a Pcell or a PUCCH-sSCell.

In some embodiments of this application, the HARQ-ACK information may include at least one of a HARQ positive acknowledgment or a HARQ negative acknowledgment.

The time domain type mentioned in embodiments of this application may be a symbol type (Symbol type), a slot type, or the like. The time unit may be a symbol, a slot, a sub-slot, or the like. When it is considered that the HARQ-ACK information may be multiplexed on the physical uplink shared channel (Physical Uplink Shared Channel, PUSCH), the time unit may be a PUCCH time unit, a PUSCH time unit, or the like. Optionally, the time domain type mentioned in embodiments of this application includes an SBFD type or a non-SBFD (non-SBFD) type, for example, an SBFD symbol (which, for example, may include at least one of the SBFD symbol for duplex mode 1 or the SBFD symbol for duplex mode 2), or a non-SBFD symbol.

Optionally, in some embodiments of this application, priorities corresponding to the plurality of pieces of HARQ-ACK information are the same. Alternatively, downlink transmission types (for example, unicast downlink transmission or multicast downlink transmission) corresponding to the plurality of pieces of HARQ-ACK information are the same. Alternatively, the plurality of pieces of HARQ-ACK information includes deferred HARQ-ACK (Deferred HARQ-ACK) information.

In this embodiment, determining the transmission manner of the plurality of pieces of HARQ-ACK information includes: for example, determining to multiplex the plurality of pieces of HARQ-ACK information into one codebook for transmission; and for another example, separately constructing codebooks based on different time domain types for transmission.

In some embodiments of this application, in the plurality of pieces of HARQ-ACK information, time domain types respectively corresponding to at least two pieces of HARQ-ACK information are different. Therefore, the time domain types corresponding to the plurality of pieces of HARQ-ACK information need to be determined. A function of determining the time domain types corresponding to the plurality of pieces of HARQ-ACK information may be to determine the transmission manner of the plurality of pieces of HARQ-ACK information, or determine a PUCCH resource used for transmitting the HARQ-ACK information and a transmission parameter (such as power or beam information).

According to the method for transmitting HARQ-ACK information provided in this embodiment of this application, in a case that the terminal is scheduled to transmit the plurality of pieces of HARQ-ACK information within the time unit, the terminal performs the first operation, where the first operation is used for transmitting the at least one piece of HARQ-ACK information in the plurality of pieces of HARQ-ACK information, and the first operation includes at least one of the following: determining the transmission manner of the plurality of pieces of HARQ-ACK information; and determining the time domain types corresponding to the plurality of pieces of HARQ-ACK information. The first operation performed by the terminal allows for transmission of HARQ-ACK information in a carrier or a cell configured with SBFD information. This may improve effectiveness of HARQ-ACK information feedback, improving transmission performance of a PDSCH, and improving effectiveness of a communication system.

In an embodiment, in embodiment 200, the determining a transmission manner of the plurality of pieces of HARQ-ACK information includes: determining to multiplex the plurality of pieces of HARQ-ACK information into one codebook for transmission. The plurality of pieces of HARQ-ACK information are first HARQ-ACK information, the first HARQ-ACK information is HARQ-ACK information with corresponding downlink control information (Downlink Control Information, DCI), and time domain types corresponding to the plurality of pieces of first HARQ-ACK information indicated by the DCI are the same. Alternatively, the plurality of pieces of HARQ-ACK information are second HARQ-ACK information, the second HARQ-ACK information is HARQ-ACK information without corresponding DCI, and the time domain types corresponding to the plurality of pieces of HARQ-ACK information are the same.

In this embodiment, the plurality of pieces of HARQ-ACK may be HARQ-ACK with the corresponding DCI, for example, HARQ-ACK for a PDSCH with corresponding scheduling DCI, or HARQ-ACK corresponding to a PDCCH that requires HARQ-ACK feedback but does not schedule a PDSCH (for example, a PDCCH indicating TCI update, a PDCCH indicating Scell dormancy, a PDCCH triggering type 3 codebook, or the like). The terminal multiplexes the plurality of pieces of HARQ-ACK into one codebook for transmission, and the terminal expects the time domain types corresponding to all DCI-indicated HARQ-ACK transmissions to be consistent.

In this embodiment, the plurality of pieces of HARQ-ACK may be HARQ-ACK without corresponding DCI (for example, HARQ-ACK for an SPS PDSCH (optionally, including a first PDSCH after the SPS PDSCH is activated)). The terminal multiplexes the plurality of pieces of HARQ-ACK into one codebook for transmission, and the terminal expects the time domain types corresponding to all HARQ-ACK information to be consistent.

In some embodiments, the HARQ-ACK information with the corresponding DCI may be understood as HARQ-ACK information corresponding to a DG PDSCH or a PDCCH. The HARQ-ACK information without the corresponding DCI may be understood as HARQ-ACK information corresponding to the SPS PDSCH.

In an embodiment, in embodiment 200, the plurality of pieces of HARQ-ACK information include first HARQ-ACK information and second HARQ-ACK information, the first HARQ-ACK information is HARQ-ACK information with corresponding DCI, the second HARQ-ACK information is HARQ-ACK information without the corresponding DCI, and the determining a transmission manner of the plurality of pieces of HARQ-ACK information includes at least one of the following:
(1) multiplexing the second HARQ-ACK information and the first HARQ-ACK information in one first codebook for transmission;
(2) multiplexing, in one first codebook for transmission, the first HARQ-ACK information and HARQ-ACK information, in the second HARQ-ACK information, corresponding to a same time domain type as the first HARQ-ACK information;
(3) discarding HARQ-ACK information, in the second HARQ-ACK information, corresponding to a different time domain type as the first HARQ-ACK information; and
(4) separately constructing a second codebook from the HARQ-ACK information, in the second HARQ-ACK information, corresponding to a different time domain type as the first HARQ-ACK information. For a manner of separately constructing the codebook, refer to descriptions in the following embodiments.

In this embodiment, for example, the terminal expects the time domain type corresponding to the second HARQ-ACK information to be the same as the time domain type corresponding to the first HARQ-ACK information, and the terminal multiplexes the second HARQ-ACK information and the first HARQ-ACK information into one first codebook for transmission.

In this embodiment, for example, the time domain type corresponding to the second HARQ-ACK information is the same as or different from the time domain type corresponding to the first HARQ-ACK information, and the terminal multiplexes the second HARQ-ACK information and the first HARQ-ACK information into one first codebook for transmission.

In this embodiment, for another example, a time domain type corresponding to a first portion of HARQ-ACK information in the second HARQ-ACK information is the same as the time domain type corresponding to the first HARQ-ACK information; and a time domain type corresponding to a second portion of HARQ-ACK information is different from the time domain type corresponding to the first HARQ-ACK information. In this case, the terminal may multiplex the first HARQ-ACK information and the first portion of HARQ-ACK information in the second HARQ-ACK information into one first codebook for transmission; and discard the second portion of the second HARQ-ACK information, or separately construct a second codebook for the second portion of the second HARQ-ACK information.

In a case that the second HARQ-ACK information and the first HARQ-ACK information are multiplexed into one first codebook for transmission, this embodiment may further include the following step: determining the PUCCH resource based on the time domain type corresponding to the first HARQ-ACK information, where the PUCCH resource is used for transmitting the first HARQ-ACK information and some or all of the second HARQ-ACK information.

Optionally, the DCI includes indication information, where the indication information is used for indicating the time domain type corresponding to at least a portion of HARQ-ACK information in the first HARQ-ACK information, and the time domain type indicated by the indication information is the same as a time domain type configured for or indicated by the time unit.

In this embodiment, some DCI formats (such as non-fallback DCI) include the indication information, while some other DCI formats (such as fallback DCI and DCI format 1_0) do not include the indication information. For DCI without the indication information, a time domain type corresponding to HARQ-ACK information of the DCI may be configured by a higher layer, predefined, or determined according to a predefined rule.

In some embodiments, the DCI indicates the time domain type corresponding to the first HARQ-ACK information. The indication may be explicit, with a corresponding indication field, or implicit, without a corresponding indication field, for example, through scrambling code of a demodulation reference signal (Demodulation Reference Signal, DMRS) or a control channel element (Control Channel Element, CCE) index.

In this embodiment, the first HARQ-ACK information is the HARQ-ACK information with the corresponding DCI. If the DCI include an indication field that is used for indicating the time domain type corresponding to the first HARQ-ACK information, the terminal expects the time domain type indicated by the DCI to be consistent with a time domain type configured or indicated for the time unit in which the terminal transmits HARQ-ACK (for example, signaling used to configure or indicate SBFD configuration information configures or indicates the time domain type of the time unit in which the HARQ-ACK is transmitted).

In an embodiment, in embodiment 200, the determining a transmission manner of the plurality of pieces of HARQ-ACK information includes: determining to multiplex the plurality of pieces of HARQ-ACK information into one codebook for transmission. The determining time domain types corresponding to the plurality of pieces of HARQ-ACK information includes: determining time domain types corresponding to a plurality of pieces of multiplexed HARQ-ACK information based on a time domain type indicated by a last DCI in DCIs corresponding to the plurality of pieces of HARQ-ACK information.

In this embodiment, the terminal multiplexes the plurality pieces of HARQ-ACK into one codebook for transmission, and the terminal determines the time domain type corresponding to the HARQ-ACK information based on the time domain type indicated by the last DCI.

Optionally, the last DCI is a last DCI in a plurality of DCIs. The plurality of DCIs include the DCI corresponding to the plurality of pieces of HARQ-ACK information. A manner for determining the last DCI may be the same as a manner for determining a DCI that is used for feeding back a physical uplink control channel resource indicator (PUCCH Resource Indicator, PRI) corresponding to a PUCCH resource of the plurality of pieces of HARQ-ACK information in a conventional technology (for example, for all DCIs that schedule transmission of corresponding HARQ-ACK within a PUCCH time domain unit, the last DCI in ascending order of serving cell indexes, that is, in ascending order of PDCCH monitoring occasions; and optionally, if a plurality of DCIs are present at a same PDCCH monitoring occasion of a same serving cell, a DCI of a PDCCH in a first CORESET takes precedence over DCI of a PDCCH in a second CORESET). Alternatively, the last DCI is a last DCI (for example, a last DCI obtained by ordering, in the plurality of DCIs, the DCI including the indication information according to a particular rule (which may be the same as the foregoing manner)) in DCIs including indication information, and the indication information is used for indicating a time domain type corresponding to the HARQ-ACK information. Alternatively, the last DCI is a last DCI (for example, a last DCI obtained by ordering, in the plurality of DCIs, a DCI for which a HARQ-ACK feedback is enabled according to a particular rule (which may be the same as the foregoing manner)) in DCIs corresponding to a downlink transmission for which a HARQ-ACK feedback is enabled.

In an embodiment, in embodiment 200, the determining a transmission manner of the plurality of pieces of HARQ-ACK information includes: determining to multiplex the plurality of pieces of HARQ-ACK information into one codebook for transmission. The determining time domain types corresponding to the plurality of pieces of HARQ-ACK information includes one of the following:
(1) Determining, based on an indication corresponding to a target semi-persistent scheduling (Semi-Persistent Scheduling, SPS) physical downlink shared channel (Physical Downlink Shared Channel, PDSCH), a time domain type corresponding to a plurality of pieces of multiplexed HARQ-ACK information, where the target SPS PDSCH is one of SPS PDSCHs corresponding to the plurality of pieces of HARQ-ACK information.

Optionally, the target SPS PDSCH is an SPS PDSCH with a smallest configuration index or a latest transmission time in the SPS PDSCHs corresponding to the plurality of pieces of HARQ-ACK information.

In this embodiment, the terminal multiplexes the plurality of pieces of HARQ-ACK into one codebook for transmission, and the terminal determines, based on an indication corresponding to a specific SPS PDSCH of the SPS PDSCHs, for example, the SPS PDSCH with the smallest configuration index (index) or the SPS PDSCH with the latest transmission time, corresponding to the plurality of pieces of HARQ-ACK information, a time domain type corresponding to multiplexed HARQ-ACK information.

(2) Determining, based on a predefined definition or a high-layer configuration, a time domain type corresponding to a plurality of pieces of multiplexed HARQ-ACK information.

In this embodiment, the terminal multiplexes the plurality of pieces of HARQ-ACK into one codebook for transmission, and the terminal determines, based on the predefined definition or the high-layer configuration, the time domain type corresponding to the multiplexed HARQ-ACK information.

In an embodiment, in embodiment 200, the determining a transmission manner of the plurality of pieces of HARQ-ACK information includes: determining to separately construct codebooks based on different time domain types corresponding to the plurality of pieces of HARQ-ACK information. This may specifically include: Third HARQ-ACK information in the plurality of pieces of HARQ-ACK information is multiplexed in a first codebook, and the third HARQ-ACK information is HARQ-ACK information, in the plurality of pieces of HARQ-ACK information, whose corresponding time domain type is an SBFD time domain type; and fourth HARQ-ACK information in the plurality of pieces of HARQ-ACK information is multiplexed in a second codebook, and the fourth HARQ-ACK information is HARQ-ACK information, in the plurality of pieces of HARQ-ACK information, whose corresponding time domain type is a non-SBFD time domain type.

In this embodiment, the terminal separately constructs the codebooks based on the time domain types corresponding to the pieces of HARQ-ACK information by using SBFD and non-SBFD, and separately determines the PUCCH resources. If the PUCCH resources do not overlap, the PUCCH resources are respectively transmitted. If the PUCCH resources overlap, a PUCCH resource corresponding to one of the symbol types is multiplexed, or a codebook of one of the types is discarded.

Specifically, for the foregoing embodiments in which the first codebook and the second codebook are mentioned, the method further includes: respectively determining PUCCH resources based on the first codebook and the second codebook.

In a case that the PUCCH resources are respectively determined based on the first codebook and the second codebook, this embodiment satisfies at least one of the following:
(1) The respectively determined PUCCH resources do not overlap, and the method further includes: respectively transmitting the first codebook and the second codebook based on the determined PUCCH resources. In this embodiment, the terminal does not expect the two PUCCHs to overlap with a same PUSCH.
(2) The respectively determined PUCCH resources do not overlap with a same PUSCH resource. In this embodiment, the terminal does not expect the two PUCCHs to overlap with a same PUSCH.
(3) The respectively determined PUCCH resources overlap with a same PUSCH resource, and the method further includes: concatenating the first codebook and the second codebook, and multiplexing the first codebook and the second codebook in the PUSCH for transmission; or multiplexing the first codebook and the second codebook in the PUSCH for transmission, where the first codebook and the second codebook are respectively encoded; or discarding one of the first codebook and the second codebook, and multiplexing an undiscarded codebook in the PUSCH resource for transmission.
(4) The respectively determined PUCCH resources overlap, and the method further includes: multiplexing the first codebook and the second codebook in one PUCCH resource for transmission; or discarding either the first codebook or the second codebook, and transmitting an undiscarded codebook.

In an embodiment, in embodiment 200, the determining a transmission manner of the plurality of pieces of HARQ-ACK information includes: determining to multiplex the plurality of pieces of HARQ-ACK information into one codebook for transmission. The method further includes: determining a PUCCH resource and a transmission parameter based on a time domain type of the time unit, where the PUCCH resource is used for transmitting the plurality of pieces of HARQ-ACK information.

In this embodiment, the terminal multiplexes the plurality of HARQ-ACK into one codebook for transmission, and determines the PUCCH resource and the transmission parameter based on a time domain type of a current PUCCH time unit.

For a case in which the terminal does not need to determine a starting symbol and a symbol position of the PUCCH based on the time domain type, for example, for PUCCH transmissions in SBFD and non-SBFD scenarios, configuration of time domain resources is common or identical. Alternatively, for PUCCH transmissions in SBFD and non-SBFD scenarios, the terminal multiplexes the plurality of pieces of HARQ-ACK information into one codebook for transmission, and determines the PUCCH resource and the transmission parameter based on a time domain type corresponding to a current PUCCH resource.

To describe in detail the method for transmitting HARQ-ACK information provided in embodiments of this application, descriptions are provided below with reference to two specific embodiments.

The following two embodiments are described by using an example in which the time domain type is a symbol type (Symbol type), and the time unit is a slot.

### Embodiment 1

In this embodiment, after a symbol type corresponding to HARQ-ACK information is determined, a PUCCH resource corresponding to the symbol type is determined in a PUCCH slot based on the symbol type, and PUCCH transmission is performed based on a transmission parameter corresponding to the symbol type. For example, a base station configures separate PUCCH resources, power control parameters for PUCCH transmission, beam information related parameters and the like for a terminal to transmit PUCCH on an SBFD symbol and a non-SBFD symbol respectively.

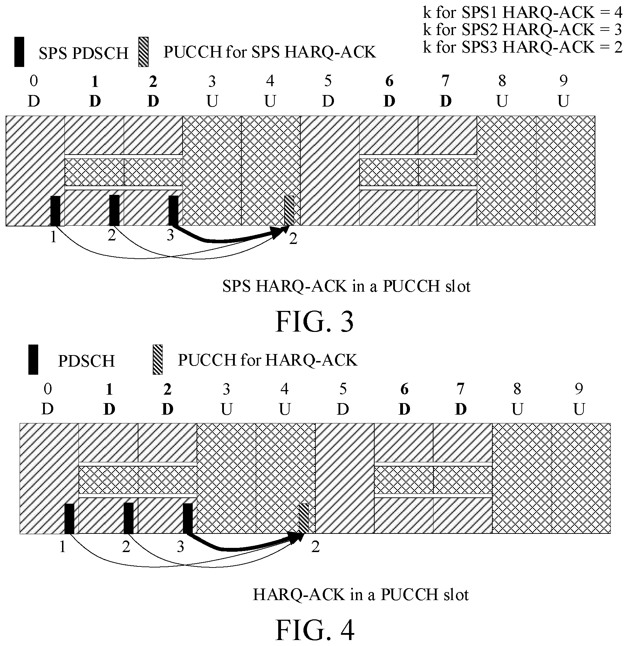

Refer to FIG. 3. It is assumed that five slots are included in a period of one TDD pattern, and a DDDUU configuration is used. The second and third D slots are configured as SBFD slots.

It is assumed that the base station configures a symbol type corresponding to a HARQ-ACK information feedback of the base station per SPS-Config, or determines a symbol type corresponding to a HARQ-ACK information feedback of the base station based on an SPS activation DCI. Because SPS PDSCHs are periodically sent, in an uplink slot, the terminal may feed back different HARQ-ACK information of different SPS PDSCHs, and corresponding symbol types indicated by a configured/activated DCI may vary. For example, in FIG. 3, based on an indication of the activation DCI, the terminal feeds back HARQ-ACK information of the SPS 1, SPS 2, and SPS 3 in slot 4. In addition, SPS 1, SPS 2 and SPS 3 correspond to different HARQ-ACK symbol types indicated by the activation DCI. It is assumed that SPS 1 corresponds to non-SBFD, and SPS 2 and SPS 3 correspond to SBFD. In this case, the terminal may operate in the following manners:
Manner 1: The terminal expects the symbol types corresponding to all the HARQ-ACK information to be consistent, that is, the terminal should avoid the above scenario during configuration/activation.
Manner 2: The terminal multiplexes a plurality of pieces of HARQ-ACK information into one codebook for transmission, and the terminal determines, based on an indication corresponding to a specific SPS of the SPS, for example, SPS with a smallest configuration index or SPS PDSCH with a latest transmission time, corresponding to the plurality of pieces of HARQ-ACK information, a symbol type of a multiplexed HARQ-ACK. The method may ensure that different types of HARQ-ACK may all be fed back, and may simplify a design.
   In Manner 2, the terminal may multiplex the HARQ-ACK information of different symbol types into one channel for transmission. Optionally, the terminal may further separately encode the HARQ-ACK information of different symbol types, thereby enabling different code rates to be used for transmission based on the different symbol types, satisfying different reliability requirements and saving uplink transmission resources.
Manner 3: The terminal multiplexes a plurality of pieces of HARQ-ACK information into one codebook for transmission, and the terminal determines, based on a predefined definition or a high-layer configuration, a symbol type of multiplexed HARQ-ACK information. For example, as long as the plurality of pieces of HARQ-ACK information includes HARQ-ACK information of a non-SBFD type, the symbol type of the multiplexed HARQ-ACK information is determined as the non-SBFD type. The method may ensure reliability of HARQ-ACK feedback, and allow different types of HARQ-ACK to be feedback.
Manner 4: The terminal separately constructs codebooks for SBFD and non-SBFD based on the symbol types corresponding to the SPS PDSCHs, and separately determines PUCCH resources. If the PUCCH resources do not overlap, the PUCCH resources are respectively transmitted. If the PUCCH resources overlap, a PUCCH resource corresponding to one of the symbol types is multiplexed, or a codebook of one of the types is discarded.
Manner 5: The terminal multiplexes a plurality of pieces of HARQ-ACK information into one codebook for transmission, and determines a PUCCH resource and a transmission parameter based on a symbol type of a current PUCCH time unit. For example, in FIG. 3, if slot 4 is a non-SBFD slot, the terminal feeds back the HARQ-ACK information of SPS 1, SPS 2, and SPS 3 together and determines the corresponding PUCCH resources (for example, determines a PUCCH resource corresponding to a HARQ-ACK feedback by using a PUCCH resource configuration corresponding to an SBFD time domain type) and transmission according to the non-SBFD.

### Embodiment 2

As shown in FIG. 4, PDSCH 1, PDSCH 2, and PDSCH 3 are respectively scheduled by using non-fallback DCI (for example, DCI format 1_1 or 1_2), fallback DCI (for example, DCI format 1_0), and non-fallback DCI. HARQ-ACK information of PDSCH 1, PDSCH 2, and PDSCH 3 is all indicated to be fed back in slot 4. It is assumed that a symbol type corresponding to the HARQ-ACK information scheduled by the fallback DCI is predefined as a non-SBFD type by a protocol. The non-fallback DCI include an indication field used for indicating a symbol type corresponding to a HARQ-ACK information feedback of the non-fallback DCI. In this case, a scenario in which the symbol types corresponding to the foregoing three pieces of HARQ-ACK information are different may occur. In this case, the terminal may operate in the following manners:
Manner 1: The terminal multiplexes a plurality of pieces of HARQ-ACK information into one codebook for transmission, and the terminal expects symbol types indicated by all the DCI to be consistent, that is, the base station should avoid a scenario of different symbol types. In other words, a non-fallback indication should be consistent with HARQ-ACK corresponding to the fallback DCI. The terminal multiplexes the plurality of HARQ-ACK together, and determines PUCCH resource transmission based on a symbol type corresponding to HARQ-ACK information with DCI (optionally, in this case, there may be a HARQ-ACK feedback for SPS PDSCH in this slot, regardless of a type of SPS HARQ-ACK).
Manner 2: The terminal multiplexes a plurality of pieces of HARQ-ACK information into one codebook for transmission, and the terminal determines a symbol type corresponding to the HARQ-ACK information based on a symbol type indicated by a last DCI.

Optionally, the last DCI is a last DCI in a plurality of DCIs. The plurality of DCIs are the DCI corresponding to the plurality of pieces of HARQ-ACK. A manner for determining the last DCI may be the same as a manner for determining a DCI that is used for feeding back a PRI corresponding to a PUCCH resource of the plurality of pieces of HARQ-ACK information (for example, for all DCIs that schedule transmission of corresponding HARQ-ACK within a PUCCH time domain unit, the last DCI in ascending order of serving cell indexes, that is, in ascending order of PDCCH monitoring occasions; and optionally, if a plurality of DCIs are present at a same PDCCH monitoring occasion of a same serving cell, DCI of a PDCCH in a first CORESET takes precedence over DCI of a PDCCH in a second CORESET).

Alternatively, the last DCI is a last DCI in DCIs including indication information, and the indication information is used for indicating a time domain type corresponding to the HARQ-ACK information, namely, the non-fallback DCI in this embodiment.

Alternatively, the last DCI is a last DCI in DCIs corresponding to a downlink transmission for which a HARQ-ACK feedback is enabled.

In addition, if it is assumed that only the HARQ-ACK information of PDSCH 1 and PDSCH 2 is indicated to be fed back in slot 4 (without PDSCH 3), the last DCI is DCI corresponding to PDSCH 2. The DCI corresponding to PDSCH 2 is the fallback DCI and does not include a symbol type indication field. In this case, the last DCI in the DCIs including the symbol type indication field is the DCI corresponding to PDSCH 1.

Manner 3: The terminal separately constructs codebooks for SBFD and non-SBFD based on the symbol types corresponding to the plurality pieces of HARQ-ACK information, and separately determines PUCCH resources. If the PUCCH resources do not overlap, the PUCCH resources are respectively transmitted. If the PUCCH resources overlap, a PUCCH resource corresponding to one of the symbol types is multiplexed, or a codebook of one of the types is discarded.

Manner 4: The terminal multiplexes a plurality of pieces of HARQ-ACK information into one codebook for transmission, and determines a PUCCH resource and a transmission parameter based on a symbol type of a current PUCCH time unit. For example, in FIG. 4, if slot 4 is a non-SBFD slot, the terminal feeds back the HARQ-ACK information of the three PDSCHs together, and determines the corresponding PUCCH resource and transmission according to the non-SBFD.

It should be noted that in the foregoing Manner 2 and Manner 4, for a portion of the HARQ-ACK information, a time domain type used for determining HARQ-ACK feedback timing (feedback timing) may be different from the time domain type corresponding to transmission of the HARQ-ACK information. This is because a k1 set and sub-slot information are configured in PUCCH-config. For the foregoing manners, if the k1 set and the sub-slot information are respectively configured in PUCCH-config corresponding to different time domain types, the terminal can determine the k1 set and the sub-slot only when the corresponding PUCCH-config is determined. For each HARQ-ACK information feedback, if the terminal determines a PUCCH feedback time unit based on corresponding HARQ-ACK feedback timing (which may be related to the symbol type), and if a plurality of HARQ-ACK needs to be fed back in the feedback time unit, application of Manner 2 and Manner 4 may result in a scenario in which the symbol type used for determining the HARQ-ACK feedback timing is different from the symbol type corresponding to HARQ-ACK transmission.

In another embodiment, the terminal does not expect a scenario in which the symbol type corresponding to the HARQ-ACK information indicated by the DCI is different from a symbol type corresponding to a time domain unit in which the HARQ-ACK transmission is located.

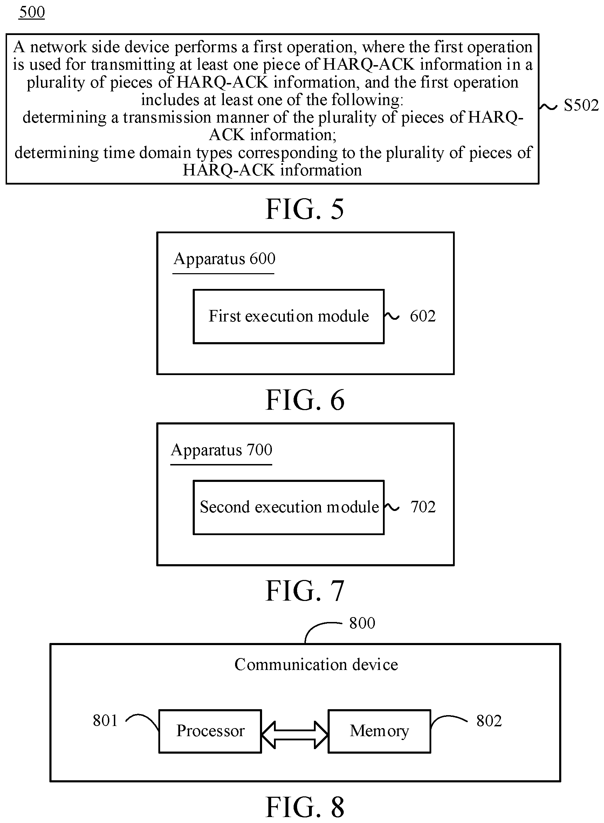

The foregoing describes in detail the method for transmitting HARQ-ACK information according to an embodiment of this application with reference to FIG. 2 to FIG. 4. The following describes in detail a method for transmitting HARQ-ACK information according to another embodiment of this application with reference to FIG. 5. It may be understood that, interaction between a network side device and a terminal described from the perspective of the network side device is the same as or corresponds to the descriptions on the terminal side in the method shown in FIG. 2. To avoid duplication, related descriptions are properly omitted.

FIG. 5 is a schematic flowchart of implementing a method for transmitting HARQ-ACK information according to an embodiment of this application. The method may be applied to a network side device and to a carrier or a cell configured with SBFD information. A terminal is scheduled to transmit a plurality of pieces of HARQ-ACK information within a time unit. As shown in FIG. 5, the method 500 includes the following steps:

S502: The network side device performs a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

In this embodiment of this application, in a case that the terminal is scheduled to transmit the plurality of pieces of HARQ-ACK information within the time unit, the network side device performs the first operation, where the first operation is used for transmitting the at least one piece of HARQ-ACK information in the plurality of pieces of HARQ-ACK information, and the first operation includes at least one of the following: determining the transmission manner of the plurality of pieces of HARQ-ACK information; and determining the time domain types corresponding to the plurality of pieces of HARQ-ACK information. The first operation performed allows for transmission of HARQ-ACK information in a carrier or a cell configured with SBFD information. This may improve effectiveness of HARQ-ACK information feedback, improving transmission performance of a PDSCH, and improving effectiveness of a communication system.

Optionally, in an embodiment, the determining a transmission manner of the plurality of pieces of HARQ-ACK information includes: determining to multiplex the plurality of pieces of HARQ-ACK information into one codebook for transmission. The plurality of pieces of HARQ-ACK information are first HARQ-ACK information, the first HARQ-ACK information is HARQ-ACK information with corresponding DCI, and time domain types corresponding to the plurality of pieces of first HARQ-ACK information indicated by the DCI are the same. Alternatively, the plurality of pieces of HARQ-ACK information are second HARQ-ACK information, the second HARQ-ACK information is HARQ-ACK information without corresponding DCI, and the time domain types corresponding to the plurality of pieces of HARQ-ACK information are the same.

Optionally, in an embodiment, the plurality of pieces of HARQ-ACK information include first HARQ-ACK information and second HARQ-ACK information, the first HARQ-ACK information is HARQ-ACK information with corresponding DCI, the second HARQ-ACK information is HARQ-ACK information without the corresponding DCI, and the determining a transmission manner of the plurality of pieces of HARQ-ACK information includes at least one of the following: (1) multiplexing the second HARQ-ACK information and the first HARQ-ACK information in one first codebook for transmission; (2) multiplexing, in one first codebook for transmission, the first HARQ-ACK information and HARQ-ACK information, in the second HARQ-ACK information, corresponding to a same time domain type as the first HARQ-ACK information; (3) discarding HARQ-ACK information, in the second HARQ-ACK information, corresponding to a different time domain type as the first HARQ-ACK information; and (4) separately constructing a second codebook from the HARQ-ACK information, in the second HARQ-ACK information, corresponding to a different time domain type as the first HARQ-ACK information.

Optionally, in an embodiment, the determining a transmission manner of the plurality of pieces of HARQ-ACK information includes: determining to multiplex the plurality of pieces of HARQ-ACK information into one codebook for transmission. The determining time domain types corresponding to the plurality of pieces of HARQ-ACK information includes: determining time domain types corresponding to a plurality of pieces of multiplexed HARQ-ACK information based on a time domain type indicated by a last DCI in DCIs corresponding to the plurality of pieces of HARQ-ACK information.

Optionally, in an embodiment, the determining a transmission manner of the plurality of pieces of HARQ-ACK information includes: determining to multiplex the plurality of pieces of HARQ-ACK information into one codebook for transmission; and the determining time domain types corresponding to the plurality of pieces of HARQ-ACK information includes: (1) determining, based on an indication corresponding to a target SPS PDSCH, a time domain type corresponding to a plurality of pieces of multiplexed HARQ-ACK information, where the target SPS PDSCH is one of SPS PDSCHs corresponding to the plurality of pieces of HARQ-ACK information; or (2) determining, based on a predefined definition or a high-layer configuration, a time domain type corresponding to a plurality of pieces of multiplexed HARQ-ACK information.

Optionally, in an embodiment, the determining a transmission manner of the plurality of pieces of HARQ-ACK information includes: determining to separately construct codebooks based on different time domain types corresponding to the plurality of pieces of HARQ-ACK information, where third HARQ-ACK information in the plurality of pieces of HARQ-ACK information is multiplexed in a first codebook, and the third HARQ-ACK information is HARQ-ACK information, in the plurality of pieces of HARQ-ACK information, whose corresponding time domain type is an SBFD time domain type; and fourth HARQ-ACK information in the plurality of pieces of HARQ-ACK information is multiplexed in a second codebook, and the fourth HARQ-ACK information is HARQ-ACK information, in the plurality of pieces of HARQ-ACK information, whose corresponding time domain type is a non-SBFD time domain type.

Optionally, in an embodiment, the determining a transmission manner of the plurality of pieces of HARQ-ACK information includes: determining to multiplex the plurality of pieces of HARQ-ACK information into one codebook for transmission. The method further includes: determining a PUCCH resource and a transmission parameter based on a time domain type of the time unit, where the PUCCH resource is used for transmitting the plurality of pieces of HARQ-ACK information.

The method for transmitting HARQ-ACK information provided in this embodiment of this application may be performed by an apparatus for transmitting HARQ-ACK information. In this embodiment of this application, an example in which the apparatus for transmitting HARQ-ACK information performs the method for transmitting HARQ-ACK information is used to describe the apparatus for transmitting HARQ-ACK information provided in an embodiment of this application.

FIG. 6 is a diagram of a structure of an apparatus for transmitting HARQ-ACK information according to an embodiment of this application. The apparatus may correspond to the terminal in other embodiments. The apparatus is used in a carrier or a cell configured with SBFD information. The apparatus is scheduled to transmit a plurality of pieces of HARQ-ACK information within a time unit. As shown in FIG. 6, an apparatus 600 includes the following module:

a first execution module 602, configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

In this embodiment of this application, in a case that the apparatus 600 is scheduled to transmit the plurality of pieces of HARQ-ACK information within the time unit, the first execution module performs the first operation, where the first operation is used for transmitting the at least one piece of HARQ-ACK information in the plurality of pieces of HARQ-ACK information, and the first operation includes at least one of the following: determining the transmission manner of the plurality of pieces of HARQ-ACK information; and determining the time domain types corresponding to the plurality of pieces of HARQ-ACK information. The first operation performed allows for transmission of HARQ-ACK information in a carrier or a cell configured with SBFD information. This may improve effectiveness of HARQ-ACK information feedback, improving transmission performance of a PDSCH, and improving effectiveness of a communication system.

Optionally, in an embodiment, the first execution module 602 is configured to: determine to multiplex the plurality of pieces of HARQ-ACK information into one codebook for transmission. The plurality of pieces of HARQ-ACK information are first HARQ-ACK information, the first HARQ-ACK information is HARQ-ACK information with corresponding DCI, and time domain types corresponding to the plurality of pieces of first HARQ-ACK information indicated by the DCI are the same. Alternatively, the plurality of pieces of HARQ-ACK information are second HARQ-ACK information, the second HARQ-ACK information is HARQ-ACK information without corresponding DCI, and the time domain types corresponding to the plurality of pieces of HARQ-ACK information are the same.

Optionally, in an embodiment, the plurality of pieces of HARQ-ACK information include first HARQ-ACK information and second HARQ-ACK information, the first HARQ-ACK information is HARQ-ACK information with corresponding DCI, and the second HARQ-ACK information is HARQ-ACK information without the corresponding DCI. The first execution module 602 is configured to perform at least one of the following: (1) multiplex the second HARQ-ACK information and the first HARQ-ACK information in one first codebook for transmission; (2) multiplex, in one first codebook for transmission, the first HARQ-ACK information and HARQ-ACK information, in the second HARQ-ACK information, corresponding to a same time domain type as the first HARQ-ACK information; (3) discard HARQ-ACK information, in the second HARQ-ACK information, corresponding to a different time domain type as the first HARQ-ACK information; and (4) separately construct a second codebook from the HARQ-ACK information, in the second HARQ-ACK information, corresponding to a different time domain type as the first HARQ-ACK information.

Optionally, in an embodiment, in a case that the second HARQ-ACK information and the first HARQ-ACK information are multiplexed into one first codebook for transmission, the first execution module 602 is further configured to: determine the PUCCH resource based on the time domain type corresponding to the first HARQ-ACK information, where the PUCCH resource is used for transmitting the first HARQ-ACK information and some or all of the second HARQ-ACK information.

Optionally, in an embodiment, the DCI includes indication information, where the indication information is used for indicating the time domain type corresponding to the first HARQ-ACK information, and the time domain type indicated by the indication information is the same as a time domain type configured for or indicated by the time unit.

Optionally, in an embodiment, the first execution module 602 is configured to: determine to multiplex the plurality of pieces of HARQ-ACK information into one codebook for transmission; and determine a time domain type corresponding to a plurality of pieces of multiplexed HARQ-ACK information based on a time domain type indicated by a last DCI in DCIs corresponding to the plurality of pieces of HARQ-ACK information.

Optionally, in an embodiment, the last DCI is a last DCI in a plurality of DCIs, and a manner for determining the last DCI is the same as a manner for determining a DCI that is used for feeding back a PRI corresponding to a PUCCH resource of the plurality of pieces of HARQ-ACK information. Alternatively, the last DCI is a last DCI in DCIs including indication information, and the indication information is used for indicating a time domain type corresponding to the HARQ-ACK information. Alternatively, the last DCI is a last DCI in DCIs corresponding to a downlink transmission for which a HARQ-ACK feedback is enabled.

Optionally, in an embodiment, the first execution module 602 is configured to: determine to multiplex the plurality of pieces of HARQ-ACK information into one codebook for transmission; and (1) determine, based on an indication corresponding to a target SPS PDSCH, a time domain type corresponding to a plurality of pieces of multiplexed HARQ-ACK information, where the target SPS PDSCH is one of SPS PDSCHs corresponding to the plurality of pieces of HARQ-ACK information; or (2) determine, based on a predefined definition or a high-layer configuration, a time domain type corresponding to a plurality of pieces of multiplexed HARQ-ACK information.

Optionally, in an embodiment, the target SPS PDSCH is an SPS PDSCH with a smallest configuration index or a latest transmission time in the SPS PDSCHs corresponding to the plurality of pieces of HARQ-ACK information.

Optionally, in an embodiment, the first execution module 602 is configured to: determine to separately construct codebooks based on different time domain types corresponding to the plurality of pieces of HARQ-ACK information, where third HARQ-ACK information in the plurality of pieces of HARQ-ACK information is multiplexed in a first codebook, and the third HARQ-ACK information is HARQ-ACK information, in the plurality of pieces of HARQ-ACK information, whose corresponding time domain type is an SBFD time domain type; and fourth HARQ-ACK information in the plurality of pieces of HARQ-ACK information is multiplexed in a second codebook, and the fourth HARQ-ACK information is HARQ-ACK information, in the plurality of pieces of HARQ-ACK information, whose corresponding time domain type is a non-SBFD time domain type.

Optionally, in an embodiment, the first execution module 602 is further configured to respectively determine PUCCH resources based on the first codebook and the second codebook.

Optionally, in an embodiment, at least one of the following is satisfied: (1) the respectively determined PUCCH resources do not overlap, and the first execution module 602 is further configured to respectively transmit the first codebook and the second codebook based on the determined PUCCH resources; (2) the respectively determined PUCCH resources do not overlap with a same PUSCH resource; (3) the respectively determined PUCCH resources overlap with a same PUSCH resource, and the first execution module 602 is further configured to: concatenate the first codebook and the second codebook, and multiplex the first codebook and the second codebook in the PUSCH for transmission; or multiplex the first codebook and the second codebook in the PUSCH for transmission, where the first codebook and the second codebook are respectively encoded; or discard one of the first codebook and the second codebook, and multiplex an undiscarded codebook in the PUSCH resource for transmission; or (4) the respectively determined PUCCH resources overlap, and the first execution module 602 is further configured to: multiplex the first codebook and the second codebook in one PUCCH resource for transmission; or discard either the first codebook or the second codebook, and transmit an undiscarded codebook.

Optionally, in an embodiment, the first execution module 602 is configured to: determine to multiplex the plurality of pieces of HARQ-ACK information into one codebook for transmission. The first execution module 602 is further configured to determine a PUCCH resource and a transmission parameter based on a time domain type of the time unit, where the PUCCH resource is used for transmitting the plurality of pieces of HARQ-ACK information.

Optionally, in an embodiment, priorities corresponding to the plurality of pieces of HARQ-ACK information are the same. Alternatively, the plurality of pieces of HARQ-ACK information includes deferred HARQ-ACK information.

For the apparatus 600 according to this embodiment of this application, refer to the process of the method 200 corresponding to this embodiment of this application. In addition, units/modules and other operations and/or functions in the apparatus 600 are respectively intended to implement corresponding processes in the method 200 and can achieve same or equivalent technical effects. For brevity, details are not described herein again.

The apparatus for transmitting HARQ-ACK information in this embodiment of this application may be an electronic device, for example, an electronic device having an operating system, or may be a component, for example, an integrated circuit or a chip, in an electronic device. The electronic device may be a terminal, or may be another device other than the terminal. For example, the terminal may include, but is not limited to, the types of the terminal 11 listed above, and the another device may be a server, a network attached storage (Network Attached Storage, NAS), or the like. This is not specifically limited in embodiments of this application.

FIG. 7 is a diagram of a structure of an apparatus for transmitting HARQ-ACK information according to an embodiment of this application. The apparatus may correspond to the network side device in other embodiments. The apparatus is used in a carrier or a cell configured with SBFD information. A terminal is scheduled to transmit a plurality of pieces of HARQ-ACK information within a time unit. As shown in FIG. 7, an apparatus 700 includes the following module:

a second execution module 702, configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

In this embodiment of this application, in a case that the terminal is scheduled to transmit the plurality of pieces of HARQ-ACK information within the time unit, the second execution module performs the first operation, where the first operation is used for transmitting the at least one piece of HARQ-ACK information in the plurality of pieces of HARQ-ACK information, and the first operation includes at least one of the following: determining the transmission manner of the plurality of pieces of HARQ-ACK information; and determining the time domain types corresponding to the plurality of pieces of HARQ-ACK information. The first operation performed allows for transmission of HARQ-ACK information in a carrier or a cell configured with SBFD information. This may improve effectiveness of HARQ-ACK information feedback, improving transmission performance of a PDSCH, and improving effectiveness of a communication system.

Optionally, in an embodiment, the second execution module 702 is configured to: determine to multiplex the plurality of pieces of HARQ-ACK information into one codebook for transmission. The plurality of pieces of HARQ-ACK information are first HARQ-ACK information, the first HARQ-ACK information is HARQ-ACK information with corresponding DCI, and time domain types corresponding to the plurality of pieces of first HARQ-ACK information indicated by the DCI are the same. Alternatively, the plurality of pieces of HARQ-ACK information are second HARQ-ACK information, the second HARQ-ACK information is HARQ-ACK information without corresponding DCI, and the time domain types corresponding to the plurality of pieces of HARQ-ACK information are the same.

Optionally, in an embodiment, the plurality of pieces of HARQ-ACK information include first HARQ-ACK information and second HARQ-ACK information, the first HARQ-ACK information is HARQ-ACK information with corresponding DCI, and the second HARQ-ACK information is HARQ-ACK information without the corresponding DCI. The second execution module 702 is configured to perform at least one of the following: (1) multiplex the second HARQ-ACK information and the first HARQ-ACK information in one first codebook for transmission; (2) multiplex, in one first codebook for transmission, the first HARQ-ACK information and HARQ-ACK information, in the second HARQ-ACK information, corresponding to a same time domain type as the first HARQ-ACK information; (3) discard HARQ-ACK information, in the second HARQ-ACK information, corresponding to a different time domain type as the first HARQ-ACK information; and (4) separately construct a second codebook from the HARQ-ACK information, in the second HARQ-ACK information, corresponding to a different time domain type as the first HARQ-ACK information.

Optionally, in an embodiment, the second execution module 702 is configured to: determine to multiplex the plurality of pieces of HARQ-ACK information into one codebook for transmission; and determine a time domain type corresponding to a plurality of pieces of multiplexed HARQ-ACK information based on a time domain type indicated by a last DCI in DCIs corresponding to the plurality of pieces of HARQ-ACK information.

Optionally, in an embodiment, the second execution module 702 is configured to: determine to multiplex the plurality of pieces of HARQ-ACK information into one codebook for transmission; and (1) determine, based on an indication corresponding to a target SPS PDSCH, a time domain type corresponding to a plurality of pieces of multiplexed HARQ-ACK information, where the target SPS PDSCH is one of SPS PDSCHs corresponding to the plurality of pieces of HARQ-ACK information; or (2) determine, based on a predefined definition or a high-layer configuration, a time domain type corresponding to a plurality of pieces of multiplexed HARQ-ACK information.

Optionally, in an embodiment, the second execution module 702 is configured to: determine to separately construct codebooks based on different time domain types corresponding to the plurality of pieces of HARQ-ACK information, where third HARQ-ACK information in the plurality of pieces of HARQ-ACK information is multiplexed in a first codebook, and the third HARQ-ACK information is HARQ-ACK information, in the plurality of pieces of HARQ-ACK information, whose corresponding time domain type is an SBFD time domain type; and fourth HARQ-ACK information in the plurality of pieces of HARQ-ACK information is multiplexed in a second codebook, and the fourth HARQ-ACK information is HARQ-ACK information, in the plurality of pieces of HARQ-ACK information, whose corresponding time domain type is a non-SBFD time domain type.

Optionally, in an embodiment, the second execution module 702 is configured to: determine to multiplex the plurality of pieces of HARQ-ACK information into one codebook for transmission. The second execution module 702 is further configured to determine a PUCCH resource and a transmission parameter based on a time domain type of the time unit, where the PUCCH resource is used for transmitting the plurality of pieces of HARQ-ACK information.

For the apparatus 700 according to this embodiment of this application, refer to the process of the method 500 corresponding to this embodiment of this application. In addition, units/modules and other operations and/or functions in the apparatus 700 are respectively intended to implement corresponding processes in the method 500 and can achieve same or equivalent technical effects. For brevity, details are not described herein again.

The apparatus for transmitting HARQ-ACK information provided in this embodiment of this application can implement the processes implemented in the method embodiments in FIG. 2 to FIG. 5, and achieve same technical effects. To avoid repetition, details are not described herein again.

Optionally, as shown in FIG. 8, an embodiment of this application further provides a communication device 800, including a processor 801 and a memory 802. The memory 802 stores a program or instructions runnable on the processor 801. For example, in a case that the communication device 800 is a terminal, when the program or the instructions are executed by the processor 801, the steps of the foregoing embodiment of the method for transmitting HARQ-ACK information are implemented, and same technical effects can be achieved. In a case that the communication device 800 is a network side device, when the program or the instructions are executed by the processor 801, the steps of the foregoing embodiment of the method for transmitting HARQ-ACK information are implemented, and same technical effects can be achieved. To avoid repetitions, details are not described herein again.

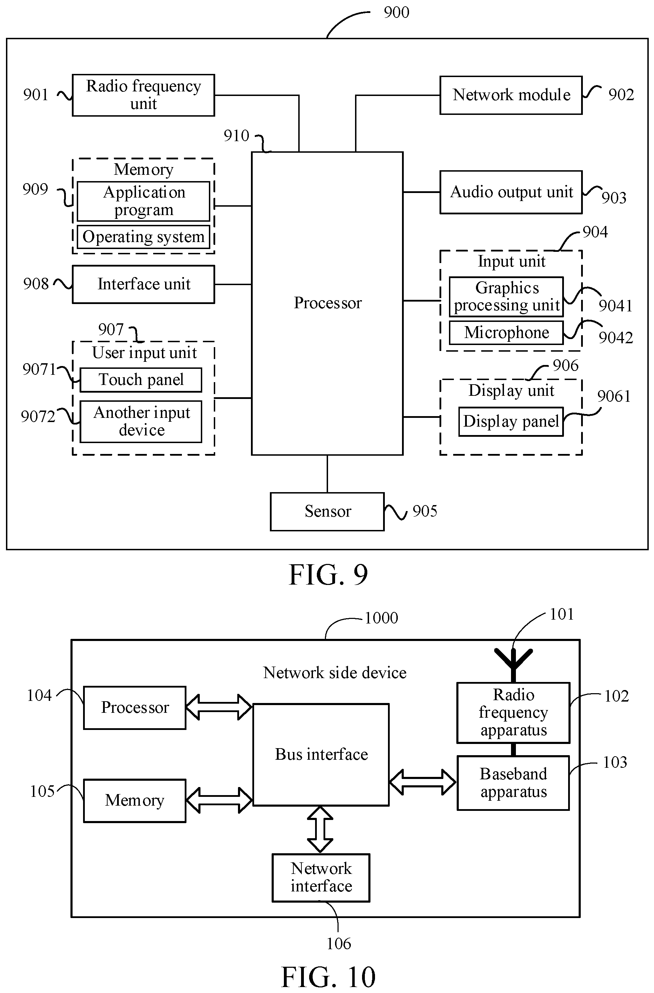

An embodiment of this application further provides a terminal, including a processor and a communication interface. The terminal is used in a carrier or a cell configured with SBFD information. The terminal is scheduled to transmit a plurality of pieces of HARQ-ACK information within a time unit. The processor is configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information. The terminal embodiment corresponds to the foregoing method embodiments on the terminal side. The implementation processes and the implementations of the foregoing method embodiments are applicable to the terminal embodiment, and same technical effects can be achieved. Specifically, FIG. 9 is a diagram of a hardware structure of a terminal for implementing an embodiment of this application.

A terminal 900 includes, but is not limited to, at least some components of a radio frequency unit 901, a network module 902, an audio output unit 903, an input unit 904, a sensor 905, a display unit 906, a user input unit 907, an interface unit 908, a memory 909, a processor 910, and the like.

A person skilled in the art may understand that the terminal 900 may further include a power supply (such as a battery) for supplying power to the components. The power supply may be logically connected to the processor 910 by using a power management system, implementing functions such as charging, discharging, and power consumption management by using the power management system. The terminal structure shown in FIG. 9 does not constitute a limitation on the terminal, and the terminal may include more or fewer components than those shown in the figure, or combine some components, or have different component arrangements. This is not described herein again.

It should be understood that in this embodiment of this application, the input unit 904 may include a graphics processing unit (Graphics Processing Unit, GPU) 9041 and a microphone 9042. The graphics processing unit 9041 processes image data of a static picture or a video that is obtained by an image capture apparatus (such as a camera) in a video capture mode or an image capture mode. The display unit 906 may include a display panel 9061. The display panel 9061 may be configured by using a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts, namely, a touch detection apparatus and a touch controller. The another input device 9072 may include, but is not limited to, a physical keyboard, a functional key (for example, a volume control key or an on/off key), a trackball, a mouse, and a joystick. Details are not described herein again.

In this embodiment of this application, after receiving downlink data from a network side device, the radio frequency unit 901 may transmit the data to the processor 910 for processing. In addition, the radio frequency unit 901 may transmit uplink data to the network side device. Generally, the radio frequency unit 901 includes, but is not limited to, an antenna, an amplifier, a transceiver, a coupler, a low noise amplifier, a duplexer, and the like.

The memory 909 may be configured to store a software program or instructions and various data. The memory 909 may mainly include a first storage area storing a program or instructions and a second storage area storing data. The first storage area may store an operating system, an application program or instructions required by at least one function (for example, a sound playback function, or an image playback function), and the like. In addition, the memory 909 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), or a direct rambus random access memory (Direct Rambus RAM, DRRAM). The memory 909 in this embodiment of this application includes but is not limited to these memories and any other suitable types of memories.

The processor 910 may include one or more processing units. Optionally, the processor 910 may integrate an application processor and a modem processor, where the application processor mainly processes operations involving an operating system, a user interface, an application program, and the like, and the modem processor mainly processes a wireless communication signal, for example, a baseband processor. It may be understood that the modem processor may alternatively not be integrated into the processor 910.

The terminal is scheduled to transmit a plurality of pieces of HARQ-ACK information within a time unit, and the terminal may be used in a carrier or a cell configured with SBFD information. The processor 910 may be configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information.

In this embodiment of this application, in a case that the terminal is scheduled to transmit the plurality of pieces of HARQ-ACK information within the time unit, the terminal performs the first operation, where the first operation is used for transmitting the at least one piece of HARQ-ACK information in the plurality of pieces of HARQ-ACK information, and the first operation includes at least one of the following: determining the transmission manner of the plurality of pieces of HARQ-ACK information; and determining the time domain types corresponding to the plurality of pieces of HARQ-ACK information. The first operation performed by the terminal allows for transmission of HARQ-ACK information in a carrier or a cell configured with SBFD information. This may improve effectiveness of HARQ-ACK information feedback, improving transmission performance of a PDSCH, and improving effectiveness of a communication system.

It may be understood that, for implementation processes of the implementations mentioned in this embodiment, refer to the related descriptions in embodiments of the method for transmitting HARQ-ACK information, and same or corresponding technical effects can be achieved. To avoid repetition, details are not described herein again.

An embodiment of this application further provides a network side device, including a processor and a communication interface. The network side device is used in a carrier or a cell configured with SBFD information. A terminal is scheduled to transmit a plurality of pieces of HARQ-ACK information within a time unit. The processor is configured to perform a first operation, where the first operation is used for transmitting at least one piece of HARQ-ACK information in the plurality of pieces of HARQ-ACK information, and the first operation includes at least one of the following: determining a transmission manner of the plurality of pieces of HARQ-ACK information; and determining time domain types corresponding to the plurality of pieces of HARQ-ACK information. The network side device embodiment corresponds to the foregoing method embodiments of the network side device. The implementation processes and the implementations of the foregoing method embodiments are applicable to the network side device embodiment, and same technical effects can be achieved.

An embodiment of this application further provides a network side device. As shown in FIG. 10, the network side device 1000 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101, and sends the received information to the baseband apparatus 103 for processing. In a downlink direction, the baseband apparatus 103 processes to-be-sent information and sends the information to the radio frequency apparatus 102. The radio frequency apparatus 102 processes the received information and sends the information through the antenna 101.

The method performed by the network side device in the foregoing embodiments may be implemented in the baseband apparatus 103, and the baseband apparatus 103 includes a baseband processor.

For example, the baseband apparatus 103 may include at least one baseband board. A plurality of chips are disposed on the baseband board. As shown in FIG. 10, one of the chips is, for example, a baseband processor, and is connected to the memory 105 through a bus interface, to invoke a program in the memory 105 to perform the network device operations shown in the foregoing method embodiments.

The network side device may further include a network interface 106. The interface is, for example, a common public radio interface (Common Public Radio Interface, CPRI).

The network side device 1000 in this embodiment of this application further includes instructions or a program, stored in the memory 105, runnable on the processor 104. The processor 104 invokes instructions or the program in the memory 105 to perform the method performed by the modules shown in FIG. 7, and achieve same technical effects. To avoid repetition, details are not described herein again.

An embodiment of this application further provides a readable storage medium. The readable storage medium stores a program or instructions. When the program or the instructions are executed by a processor, the processes of the foregoing embodiments of the method for transmitting HARQ-ACK information are implemented, and same technical effects can be achieved. To avoid repetition, details are not described herein again.

The processor is the processor in the terminal in the foregoing embodiments. The readable storage medium may be non-volatile or non-transient. The readable storage medium includes a computer readable storage medium, for example, a computer read-only memory ROM, a random access memory RAM, a magnetic disk, an optical disc, or the like. In some examples, the readable storage medium may be a non-transitory readable storage medium.

An embodiment of this application further provides a chip. The chip includes a processor and a communication interface. The communication interface is coupled to the processor. The processor is configured to run a program or instructions, to implement the processes in the foregoing embodiments of the method for transmitting HARQ-ACK information, and can achieve same technical effects. To avoid repetition, details are not described herein again.

It should be understood that the chip mentioned in this embodiment of this application may also be referred to as a system-level chip, a system chip, a chip system, a system-on-a-chip, or the like.

An embodiment of this application further provides a computer program/program product. The computer program/program product is stored in a storage medium. The computer program/program product is executed by at least one processor to implement the processes of the foregoing embodiments of the method for transmitting HARQ-ACK information, and achieve same technical effects. To avoid repetition, details are not described herein again.

An embodiment of this application further provides a system for transmitting HARQ-ACK information, including a terminal and a network side device. The terminal may be configured to perform the steps of the foregoing method for transmitting HARQ-ACK information, and the network side device may be configured to perform the steps of the foregoing method for transmitting HARQ-ACK information.

It should be noted that in this specification, terms "comprise", "include", or any other variants thereof are intended to encompass non-exclusive inclusion, so that a process, a method, an article, or an apparatus including a series of elements not only includes those elements, but also includes another element not listed explicitly, or further includes intrinsic elements of the process, the method, the article, or the apparatus. Without any further limitation, an element defined by the phrase "include one ..." does not exclude existence of an additional same element in the process, the method, the article, or the device that includes the element. In addition, it should be noted that, the scope of the methods and apparatuses in embodiments of this application is not limited to performing functions in the sequence shown or discussed, and may further include performing functions in a basically simultaneous manner or in a reverse sequence based on related functions. For example, the described methods may be performed in a sequence different from the described sequence, and various steps may be added, omitted, or combined. In addition, features described with reference to some examples may be combined in other examples.

From the descriptions of the foregoing implementations, a person skilled in the art may clearly understand that the methods of the foregoing embodiments may be implemented by using a computer software product and a necessary general-purpose hardware platform, or by using hardware. The computer software product is stored in a storage medium (for example, a ROM, a RAM, a magnetic disk, an optical disc, or the like), and includes several instructions for indicating a terminal or a network side device to perform the methods described in embodiments of this application.

The foregoing describes embodiments of this application with reference to the accompanying drawings. However, this application is not limited to the foregoing specific implementations. The foregoing specific implementations are merely examples, but are not limitative. Inspired by this application, persons of ordinary skill in the art may further make modified embodiments without departing from the purposes of this application and the protection scope of the claims, and all modified embodiments shall fall within the protection of this application.

## Claims

1. A method for transmitting hybrid automatic repeat request acknowledgement HARQ-ACK information, applied to a carrier or a cell configured with subband full duplex SBFD information, wherein a terminal is scheduled to transmit a plurality of pieces of HARQ-ACK information within a time unit, and the method comprises:
performing, by the terminal, a first operation, wherein the first operation is used for transmitting at least one piece of HARQ-ACK information in the plurality of pieces of HARQ-ACK information, and the first operation comprises at least one of the following:
determining a transmission manner of the plurality of pieces of HARQ-ACK information; and
determining time domain types corresponding to the plurality of pieces of HARQ-ACK information.

2. The method according to claim 1, wherein the determining a transmission manner of the plurality of pieces of HARQ-ACK information comprises: determining to multiplex the plurality of pieces of HARQ-ACK information into one codebook for transmission, wherein
the plurality of pieces of HARQ-ACK information are first HARQ-ACK information, the first HARQ-ACK information is HARQ-ACK information with corresponding downlink control information DCI, and time domain types corresponding to the plurality of pieces of first HARQ-ACK information indicated by the DCI are the same; or
the plurality of pieces of HARQ-ACK information are second HARQ-ACK information, the second HARQ-ACK information is HARQ-ACK information without corresponding DCI, and the time domain types corresponding to the plurality of pieces of HARQ-ACK information are the same.

3. The method according to claim 1, wherein the plurality of pieces of HARQ-ACK information comprise first HARQ-ACK information and second HARQ-ACK information, the first HARQ-ACK information is HARQ-ACK information with corresponding DCI, the second HARQ-ACK information is HARQ-ACK information without the corresponding DCI, and the determining a transmission manner of the plurality of pieces of HARQ-ACK information comprises at least one of the following:
multiplexing the second HARQ-ACK information and the first HARQ-ACK information in one first codebook for transmission;
multiplexing, in one first codebook for transmission, the first HARQ-ACK information and HARQ-ACK information, in the second HARQ-ACK information, corresponding to a same time domain type as the first HARQ-ACK information;
discarding HARQ-ACK information, in the second HARQ-ACK information, corresponding to a different time domain type as the first HARQ-ACK information; and
separately constructing a second codebook from the HARQ-ACK information, in the second HARQ-ACK information, corresponding to a different time domain type as the first HARQ-ACK information.

4. The method according to claim 3, wherein in a case that the second HARQ-ACK information and the first HARQ-ACK information are multiplexed in one first codebook for transmission, the method further comprises:
determining a PUCCH resource based on the time domain type corresponding to the first HARQ-ACK information, wherein the PUCCH resource is used for transmitting the first HARQ-ACK information and some or all of the second HARQ-ACK information.

5. The method according to claim 2 or 3, wherein the DCI comprises indication information, wherein the indication information is used for indicating the time domain type corresponding to the first HARQ-ACK information, and the time domain type indicated by the indication information is the same as a time domain type configured for or indicated by the time unit.

6. The method according to claim 1, wherein the determining a transmission manner of the plurality of pieces of HARQ-ACK information comprises: determining to multiplex the plurality of pieces of HARQ-ACK information into one codebook for transmission; and
the determining time domain types corresponding to the plurality of pieces of HARQ-ACK information comprises: determining time domain types corresponding to a plurality of pieces of multiplexed HARQ-ACK information based on a time domain type indicated by a last DCI in DCIs corresponding to the plurality of pieces of HARQ-ACK information.

7. The method according to claim 6, wherein
the last DCI is a last DCI in a plurality of DCIs, and a manner for determining the last DCI is the same as a manner for determining a DCI that is used for feeding back a physical uplink control channel resource indicator PRI corresponding to a physical uplink control channel PUCCH resource of the plurality of pieces of HARQ-ACK information; or
the last DCI is a last DCI in DCIs comprising indication information, and the indication information is used for indicating a time domain type corresponding to the HARQ-ACK information; or
the last DCI is a last DCI in DCIs corresponding to a downlink transmission for which a HARQ-ACK feedback is enabled.

8. The method according to claim 1, wherein the determining a transmission manner of the plurality of pieces of HARQ-ACK information comprises: determining to multiplex the plurality of pieces of HARQ-ACK information into one codebook for transmission; and the determining time domain types corresponding to the plurality of pieces of HARQ-ACK information comprises:
determining, based on an indication corresponding to a target semi-persistent scheduling physical downlink shared channel SPS PDSCH, a time domain type corresponding to a plurality of pieces of multiplexed HARQ-ACK information, wherein the target SPS PDSCH is one of SPS PDSCHs corresponding to the plurality of pieces of HARQ-ACK information; or
determining, based on a predefined definition or a high-layer configuration, a time domain type corresponding to a plurality of pieces of multiplexed HARQ-ACK information.

9. The method according to claim 8, wherein the target SPS PDSCH is:
an SPS PDSCH with a smallest configuration index or a latest transmission time in the SPS PDSCHs corresponding to the plurality of pieces of HARQ-ACK information.

10. The method according to claim 1, wherein the determining a transmission manner of the plurality of pieces of HARQ-ACK information comprises: determining to separately construct codebooks based on different time domain types corresponding to the plurality of pieces of HARQ-ACK information, wherein
third HARQ-ACK information in the plurality of pieces of HARQ-ACK information is multiplexed in a first codebook, and the third HARQ-ACK information is HARQ-ACK information, in the plurality of pieces of HARQ-ACK information, whose corresponding time domain type is an SBFD time domain type; and
fourth HARQ-ACK information in the plurality of pieces of HARQ-ACK information is multiplexed in a second codebook, and the fourth HARQ-ACK information is HARQ-ACK information, in the plurality of pieces of HARQ-ACK information, whose corresponding time domain type is a non-SBFD time domain type.

11. The method according to claim 3 or 10, wherein the method further comprises:
respectively determining PUCCH resources based on the first codebook and the second codebook.

12. The method according to claim 11, wherein the method satisfies at least one of the following:
the respectively determined PUCCH resources do not overlap, and the method further comprises: respectively transmitting the first codebook and the second codebook based on the determined PUCCH resources;
the respectively determined PUCCH resources do not overlap with a same PUSCH resource;
the respectively determined PUCCH resources overlap with a same PUSCH resource, and the method further comprises: concatenating the first codebook and the second codebook, and multiplexing the first codebook and the second codebook in the PUSCH for transmission; or multiplexing the first codebook and the second codebook in the PUSCH for transmission, wherein the first codebook and the second codebook are respectively encoded; or discarding one of the first codebook and the second codebook, and multiplexing an undiscarded codebook in the PUSCH resource for transmission; or
the respectively determined PUCCH resources overlap, and the method further comprises: multiplexing the first codebook and the second codebook in one PUCCH resource for transmission; or discarding either the first codebook or the second codebook, and transmitting an undiscarded codebook.

13. The method according to claim 1, wherein the determining a transmission manner of the plurality of pieces of HARQ-ACK information comprises: determining to multiplex the plurality of pieces of HARQ-ACK information into one codebook for transmission; and
the method further comprises: determining a PUCCH resource and a transmission parameter based on a time domain type of the time unit, wherein the PUCCH resource is used for transmitting the plurality of pieces of HARQ-ACK information.

14. The method according to any one of claims 1 to 13, wherein priorities corresponding to the plurality of pieces of HARQ-ACK information are the same; or
the plurality of pieces of HARQ-ACK information comprise deferred HARQ-ACK information.

15. A method for transmitting HARQ-ACK information, applied to a carrier or a cell configured with SBFD information, wherein a terminal is scheduled to transmit a plurality of pieces of HARQ-ACK information within a time unit, and the method comprises:
performing, by a network side device, a first operation, wherein the first operation is used for transmitting at least one piece of HARQ-ACK information in the plurality of pieces of HARQ-ACK information, and the first operation comprises at least one of the following:
determining a transmission manner of the plurality of pieces of HARQ-ACK information; and
determining time domain types corresponding to the plurality of pieces of HARQ-ACK information.

16. The method according to claim 15, wherein the determining a transmission manner of the plurality of pieces of HARQ-ACK information comprises: determining to multiplex the plurality of pieces of HARQ-ACK information into one codebook for transmission; and
the plurality of pieces of HARQ-ACK information are first HARQ-ACK information, the first HARQ-ACK information is HARQ-ACK information with corresponding DCI, and time domain types corresponding to the plurality of pieces of first HARQ-ACK information indicated by the DCI are the same; or
the plurality of pieces of HARQ-ACK information are second HARQ-ACK information, the second HARQ-ACK information is HARQ-ACK information without corresponding DCI, and time domain types corresponding to the plurality of pieces of HARQ-ACK information are the same.

17. The method according to claim 15, wherein the plurality of pieces of HARQ-ACK information comprise first HARQ-ACK information and second HARQ-ACK information, the first HARQ-ACK information is HARQ-ACK information with corresponding DCI, the second HARQ-ACK information is HARQ-ACK information without the corresponding DCI, and the determining a transmission manner of the plurality of pieces of HARQ-ACK information comprises at least one of the following:
multiplexing the second HARQ-ACK information and the first HARQ-ACK information in one first codebook for transmission;
multiplexing, in one first codebook for transmission, the first HARQ-ACK information and HARQ-ACK information, in the second HARQ-ACK information, corresponding to a same time domain type as the first HARQ-ACK information;
discarding HARQ-ACK information, in the second HARQ-ACK information, corresponding to a different time domain type as the first HARQ-ACK information; and
separately constructing a second codebook from the HARQ-ACK information, in the second HARQ-ACK information, corresponding to a different time domain type as the first HARQ-ACK information.

18. The method according to claim 15, wherein the determining a transmission manner of the plurality of pieces of HARQ-ACK information comprises: determining to multiplex the plurality of pieces of HARQ-ACK information into one codebook for transmission; and
the determining time domain types corresponding to the plurality of pieces of HARQ-ACK information comprises: determining time domain types corresponding to a plurality of pieces of multiplexed HARQ-ACK information based on a time domain type indicated by a last DCI in DCIs corresponding to the plurality of pieces of HARQ-ACK information.

19. The method according to claim 15, wherein the determining a transmission manner of the plurality of pieces of HARQ-ACK information comprises: determining to multiplex the plurality of pieces of HARQ-ACK information into one codebook for transmission; and the determining time domain types corresponding to the plurality of pieces of HARQ-ACK information comprises:
determining, based on an indication corresponding to a target SPS PDSCH, a time domain type corresponding to a plurality of pieces of multiplexed HARQ-ACK information, wherein the target SPS PDSCH is one of SPS PDSCHs corresponding to the plurality of pieces of HARQ-ACK information; or
determining, based on a predefined definition or a high-layer configuration, a time domain type corresponding to a plurality of pieces of multiplexed HARQ-ACK information.

20. The method according to claim 15, wherein the determining a transmission manner of the plurality of pieces of HARQ-ACK information comprises: determining to separately construct codebooks based on different time domain types corresponding to the plurality of pieces of HARQ-ACK information, wherein
third HARQ-ACK information in the plurality of pieces of HARQ-ACK information is multiplexed in a first codebook, and the third HARQ-ACK information is HARQ-ACK information, in the plurality of pieces of HARQ-ACK information, whose corresponding time domain type is an SBFD time domain type; and
fourth HARQ-ACK information in the plurality of pieces of HARQ-ACK information is multiplexed in a second codebook, and the fourth HARQ-ACK information is HARQ-ACK information, in the plurality of pieces of HARQ-ACK information, whose corresponding time domain type is a non-SBFD time domain type.

21. The method according to claim 15, wherein the determining a transmission manner of the plurality of pieces of HARQ-ACK information comprises: determining to multiplex the plurality of pieces of HARQ-ACK information into one codebook for transmission; and the method further comprises:
determining a PUCCH resource and a transmission parameter based on a time domain type of the time unit, wherein the PUCCH resource is used for transmitting the plurality of pieces of HARQ-ACK information.

22. An apparatus for transmitting HARQ-ACK information, used in a carrier or a cell configured with SBFD information, wherein the apparatus is scheduled to transmit a plurality of pieces of HARQ-ACK information within a time unit, and the apparatus comprises:
a first execution module, configured to perform a first operation, wherein the first operation is used for transmitting at least one piece of HARQ-ACK information in the plurality of pieces of HARQ-ACK information, and the first operation comprises at least one of the following:
determining a transmission manner of the plurality of pieces of HARQ-ACK information; and
determining time domain types corresponding to the plurality of pieces of HARQ-ACK information.

23. The apparatus according to claim 22, wherein the first execution module is configured to determine to multiplex the plurality of pieces of HARQ-ACK information into one codebook for transmission; wherein
the plurality of pieces of HARQ-ACK information are first HARQ-ACK information, the first HARQ-ACK information is HARQ-ACK information with corresponding downlink control information DCI, and time domain types corresponding to the plurality of pieces of first HARQ-ACK information indicated by the DCI are the same; or
the plurality of pieces of HARQ-ACK information are second HARQ-ACK information, the second HARQ-ACK information is HARQ-ACK information without corresponding DCI, and time domain types corresponding to the plurality of pieces of HARQ-ACK information are the same.

24. The apparatus according to claim 22, wherein the plurality of pieces of HARQ-ACK information comprise first HARQ-ACK information and second HARQ-ACK information, the first HARQ-ACK information is HARQ-ACK information with corresponding DCI, the second HARQ-ACK information is HARQ-ACK information without the corresponding DCI, and the first execution module is configured to perform at least one of the following:
multiplex the second HARQ-ACK information and the first HARQ-ACK information in one first codebook for transmission;
multiplex, in one first codebook for transmission, the first HARQ-ACK information and HARQ-ACK information, in the second HARQ-ACK information, corresponding to a same time domain type as the first HARQ-ACK information;
discard HARQ-ACK information, in the second HARQ-ACK information, corresponding to a different time domain type as the first HARQ-ACK information; and
separately constructing a second codebook from the HARQ-ACK information, in the second HARQ-ACK information, corresponding to a different time domain type as the first HARQ-ACK information.

25. The apparatus according to claim 22, wherein
the first execution module is configured to determine to: multiplex the plurality of pieces of HARQ-ACK information into one codebook for transmission; and
determine a time domain type corresponding to a plurality of pieces of multiplexed HARQ-ACK information based on a time domain type indicated by a last DCI in DCIs corresponding to the plurality of pieces of HARQ-ACK information.

26. The apparatus according to claim 22, wherein the first execution module is configured to determine to: multiplex the plurality of pieces of HARQ-ACK information into one codebook for transmission; and
determine, based on an indication corresponding to a target semi-persistent scheduling physical downlink shared channel SPS PDSCH, a time domain type corresponding to a plurality of pieces of multiplexed HARQ-ACK information, wherein the target SPS PDSCH is one of SPS PDSCHs corresponding to the plurality of pieces of HARQ-ACK information; or
determine, based on a predefined definition or a high-layer configuration, a time domain type corresponding to a plurality of pieces of multiplexed HARQ-ACK information.

27. The apparatus according to claim 22, wherein the first execution module is configured to: determine to separately construct codebooks based on different time domain types corresponding to the plurality of pieces of HARQ-ACK information, wherein
third HARQ-ACK information in the plurality of pieces of HARQ-ACK information is multiplexed in a first codebook, and the third HARQ-ACK information is HARQ-ACK information, in the plurality of pieces of HARQ-ACK information, whose corresponding time domain type is an SBFD time domain type; and
fourth HARQ-ACK information in the plurality of pieces of HARQ-ACK information is multiplexed in a second codebook, and the fourth HARQ-ACK information is HARQ-ACK information, in the plurality of pieces of HARQ-ACK information, whose corresponding time domain type is a non-SBFD time domain type.

28. The apparatus according to claim 22, wherein
the first execution module is configured to determine to: multiplex the plurality of pieces of HARQ-ACK information into one codebook for transmission; and
determine a PUCCH resource and a transmission parameter based on a time domain type of the time unit, wherein the PUCCH resource is used for transmitting the plurality of pieces of HARQ-ACK information.

29. An apparatus for transmitting HARQ-ACK information, used in a carrier or a cell configured with SBFD information, wherein a terminal is scheduled to transmit a plurality of pieces of HARQ-ACK information within a time unit, and the apparatus comprises:
a second execution module, configured to perform a first operation, wherein the first operation is used for transmitting at least one piece of HARQ-ACK information in the plurality of pieces of HARQ-ACK information, and the first operation comprises at least one of the following:
determining a transmission manner of the plurality of pieces of HARQ-ACK information; and
determining time domain types corresponding to the plurality of pieces of HARQ-ACK information.

30. The apparatus according to claim 29, wherein the second execution module is configured to determine to multiplex the plurality of pieces of HARQ-ACK information into one codebook for transmission, wherein
the plurality of pieces of HARQ-ACK information are first HARQ-ACK information, the first HARQ-ACK information is HARQ-ACK information with corresponding DCI, and time domain types corresponding to the plurality of pieces of first HARQ-ACK information indicated by the DCI are the same; or
the plurality of pieces of HARQ-ACK information are second HARQ-ACK information, the second HARQ-ACK information is HARQ-ACK information without corresponding DCI, and time domain types corresponding to the plurality of pieces of HARQ-ACK information are the same.

31. The apparatus according to claim 29, wherein the plurality of pieces of HARQ-ACK information comprise first HARQ-ACK information and second HARQ-ACK information, the first HARQ-ACK information is HARQ-ACK information with corresponding DCI, the second HARQ-ACK information is HARQ-ACK information without the corresponding DCI, and the second execution module is configured to perform at least one of the following:
multiplex the second HARQ-ACK information and the first HARQ-ACK information in one first codebook for transmission;
multiplex, in one first codebook for transmission, the first HARQ-ACK information and HARQ-ACK information, in the second HARQ-ACK information, corresponding to a same time domain type as the first HARQ-ACK information;
discard HARQ-ACK information, in the second HARQ-ACK information, corresponding to a different time domain type as the first HARQ-ACK information; and
separately constructing a second codebook from the HARQ-ACK information, in the second HARQ-ACK information, corresponding to a different time domain type as the first HARQ-ACK information.

32. The apparatus according to claim 29, wherein
the second execution module is configured to: determine to multiplex the plurality of pieces of HARQ-ACK information into one codebook for transmission; and
determine a time domain type corresponding to a plurality of pieces of multiplexed HARQ-ACK information based on a time domain type indicated by a last DCI in DCIs corresponding to the plurality of pieces of HARQ-ACK information.

33. The apparatus according to claim 29, wherein the second execution module is configured to: determine to multiplex the plurality of pieces of HARQ-ACK information into one codebook for transmission; and
determine, based on an indication corresponding to a target SPS PDSCH, a time domain type corresponding to a plurality of pieces of multiplexed HARQ-ACK information, wherein the target SPS PDSCH is one of SPS PDSCHs corresponding to the plurality of pieces of HARQ-ACK information; or
determine, based on a predefined definition or a high-layer configuration, a time domain type corresponding to a plurality of pieces of multiplexed HARQ-ACK information.

34. The apparatus according to claim 29, wherein the second execution module is configured to: determine to separately construct codebooks based on different time domain types corresponding to the plurality of pieces of HARQ-ACK information;
third HARQ-ACK information in the plurality of pieces of HARQ-ACK information is multiplexed in a first codebook, and the third HARQ-ACK information is HARQ-ACK information, in the plurality of pieces of HARQ-ACK information, whose corresponding time domain type is an SBFD time domain type; and
fourth HARQ-ACK information in the plurality of pieces of HARQ-ACK information is multiplexed in a second codebook, and the fourth HARQ-ACK information is HARQ-ACK information, in the plurality of pieces of HARQ-ACK information, whose corresponding time domain type is a non-SBFD time domain type.

35. The apparatus according to claim 29, wherein the second execution module is configured to: determine to multiplex the plurality of pieces of HARQ-ACK information into one codebook for transmission; and
determine a PUCCH resource and a transmission parameter based on a time domain type of the time unit, wherein the PUCCH resource is used for transmitting the plurality of pieces of HARQ-ACK information.

36. A terminal, comprising a processor and a memory, wherein the memory stores a program or instructions runnable on the processor, and when the program or the instructions are executed by the processor, the steps of the method according to any one of claims 1 to 14 are implemented.

37. A network side device, comprising a processor and a memory, wherein the memory stores a program or instructions runnable on the processor, and when the program or the instructions are executed by the processor, the steps of the method according to any one of claims 15 to 21 are implemented.

38. A readable storage medium, wherein the readable storage medium stores a program or instructions, and when the program or the instructions are executed by a processor, the steps of the method according to any one of claims 1 to 14 or the steps of the method according to any one of claims 15 to 21 are implemented.
